# EUROPÄISCHE PATENTSCHRIFT

(11) **EP 3 345 060 B1**
(45) Veröffentlichungstag und Bekanntmachung des Hinweises auf die Patenterteilung: **02.10.2019**
(21) Anmeldenummer: 16753884.2
(22) Anmeldetag: 12.08.2016
(51) Int. Cl.: G05B 19/042, G06Q 50/04, G06Q 10/00, G06F 16/907

(54) **VERFAHREN UND SYSTEM ZUR INSTANDHALTUNG EINER MESSSTELLE IN EINER ANLAGE DER PROZESSAUTOMATISIERUNG**
METHOD AND SYSTEM FOR MAINTENANCE OF A MEASURING POINT IN A PROCESS AUTOMATION SYSTEM
PROCÉDÉ ET SYSTÈME DE MAINTENANCE D'UN POINT DE MESURE DANS UNE INSTALLATION DE PROCESSUS AUTOMATISÉE

(30) Priorität: 04.09.2015 DE 102015114837
(43) Veröffentlichungstag der Anmeldung: 11.07.2018
(73) Patentinhaber: Endress+Hauser Process Solutions AG, 4153 Reinach (CH); Endress+Hauser Management AG, 4153 Reinach (CH); Endress+Hauser SE+Co. KG, 79689 Maulburg (DE); Endress+Hauser InfoServe GmbH+Co. KG, 79576 Weil am Rhein (DE); Endress+Hauser Messtechnik GmbH+Co. KG, 79576 Weil am Rhein (DE)
(72) Erfinder: BARET, Marc, 68680 Kembs (FR); HAUSS, Georg, 79102 Freiburg (DE); KAISER, Ulrich, 4057 Basel (CH); MANEVAL, Michael, 79650 Schopfheim (DE); NICK, Markus, 68680 Kembs (FR)
(74) Vertreter: Andres, Angelika Maria
(86) Internationale Anmeldenummer: PCT/EP2016/069195
(87) Internationale Veröffentlichungsnummer: WO 2017/036761

(56) Entgegenhaltungen:
- DE-A1- 10 212 802
- DE-A1-102007 026 678
- US-A1- 2013 211 546

## Beschreibung

Die Erfindung betrifft ein Verfahren und ein System zur Instandhaltung einer Messstelle in einer Anlage der Prozessautomatisierung, welches zumindest eine Vielzahl von Feldgeräten, die sich in einem Lager befinden, eine Datenbank und eine Recheneinheit umfasst.

Aus dem Stand der Technik sind bereits Feldgeräte bekannt geworden, die in industriellen Anlagen zum Einsatz kommen. In der Automatisierungstechnik, insbesondere der Prozessautomatisierung und der Fertigungsautomatisierungstechnik werden vielfach Feldgeräte eingesetzt. Als Feldgeräte werden im Prinzip alle Geräte bezeichnet, die prozessnah eingesetzt werden und die prozessrelevante Informationen liefern oder verarbeiten. So werden Feldgeräte zur Erfassung und/oder Beeinflussung von Prozessgrößen verwendet. Zur Erfassung von Prozessgrößen dienen Messgeräte, bzw. Sensoren. Diese werden beispielsweise zur Druck- und Temperaturmessung, Leitfähigkeitsmessung, pH-Messung, Durchflussmessung, Füllstandmessung, etc. verwendet und erfassen die entsprechenden Prozessvariablen Druck, Temperatur, Leitfähigkeit, pH-Wert, Füllstand, Durchfluss etc. Zur Beeinflussung von Prozessgrößen werden Aktoren verwendet. Diese sind beispielsweise Pumpen oder Ventile, die den Durchfluss einer Flüssigkeit in einem Rohr oder den Füllstand in einem Behälter beeinflussen können. Neben den zuvor genannten Messgeräten und Aktoren werden unter Feldgeräten auch Remote I/Os, Funkadapter bzw. allgemein Geräte verstanden, die auf der Feldebene angeordnet sind.

Eine Vielzahl solcher Feldgeräte wird von der Endress+Hauser-Gruppe produziert und vertrieben.

Austauschfeldgeräte, die ein veraltetes oder ein defektes Feldgerät einer Messstelle in einer Anlage ersetzen, müssen spezifisch zur jeweiligen Applikation passen.
Es existieren jedoch nahezu unzählige Varianten eines Feldgerätes. Selbst innerhalb eines Produkttyps eines Feldgeräts, beispielsweise dem Proline Promag P200, einem magnetisch induktiven Durchflussmessgerät der Endress+Hauser-Gruppe, sind eine Vielzahl von Variationen möglich, beispielsweise hinsichtlich Flanschgröße, hinsichtlich Ex-Schutz, hinsichtlich Messmedium, hinsichtlich Feldbusprotokoll, etc.

Fällt ein Feldgerät einer Anlage aus, so muss umgehend für Ersatz gesorgt werden, um, abhängig von der Applikation des Feldgeräts, einen möglichen Prozessausfall zu verhindern. Oft führen Kunden eine Vielzahl von Feldgeräten im Lager. Für den Kunden ist es unter Umständen jedoch schwierig, ein passendes Ersatzgerät aus dem Lager zu bestimmen. Auch ist es durch den Variantenreichtum der Feldgeräte unwahrscheinlich, ein für die jeweilige Applikation exakt passendes Feldgerät im Lager zu führen.

In der US 20130211546 A1 wird ein Cloud-fähiges Gerät offenbart, das die automatische Konfiguration und Integration des Geräts in ein Automatisierungssystem ermöglicht. Bei der Installation innerhalb des Automatisierungssystems ermittelt das intelligente Gerät seinen geografischen Standort, identifiziert andere Geräte auf dem System und bestimmt seine Rolle innerhalb des Systems. Das intelligente Gerät baut dann eine Kommunikation mit einer Cloud-Plattform auf, auf der eine oder mehrere Cloud-basierte Anwendungen oder Dienste laufen, und sendet ein Geräteprofil, das die gesammelten Informationen enthält, an die Cloud-Plattform. Das Geräteprofil kann verwendet werden, um das Gerät automatisch für den Betrieb innerhalb des Systems zu konfigurieren oder um das intelligente Gerät einer vorhandenen Cloud-basierten Anwendung hinzuzufügen.

Die DE 102007026678 A1 offenbart ein Verfahren zum Austausch eines zu ersetzenden Feldgerätes gegen ein neues Feldgerät in einem über einen digitalen Feldbus kommunizierenden System, insbesondere einem Automatisierungssystem, wobei bisherige Parameter, Informationen und/oder Werte des zu ersetzenden Feldgerätes durch eine über den Feldbus kommunizierende elektronische Steuereinheit mit Parametern, Informationen und/oder Werten des neuen Feldgeräts bezüglich mindestens eines Datensatzes verglichen werden, um diese erforderlichenfalls gemäß dem zu ersetzenden Feldgerät zu ändern.

Die DE 10212802 A1 offenbart ein Verfahren zum Leistungsmerkmal-gesteuerten Auswählen wenigstens eines Produktes aus einer Vielzahl von gleichartigen Produkten, mit folgenden Verfahrensschritten: Speichern von Identifikationsdaten einer Vielzahl von Produkten sowie der zum jeweiligen Produkt gehörenden tatsächlichen Leistungsmerkmale; Ändern wenigstens eines Leistungsmerkmals wenigstens eines Produktes in vorbestimmter Weise; Speichern der geänderten Leistungsmerkmale; Auffordern eines Kunden, die für ein gewünschtes Produkt notwendigen Leistungsmerkmale anzugeben; Vergleichen der angegebenen notwendigen Leistungsmerkmale mit den geänderten Leistungsmerkmalen; Auswählen wenigstens eines Produktes, wenn wenigstens ein notwendiges Leistungsmerkmal mit einem geänderten Leistungsmerkmal übereinstimmt und/oder wenn wenigstens ein notwendiges Leistungsmerkmal innerhalb eines vorbestimmten Toleranzbereichs zu einem geänderten Leistungsmerkmal liegt.

Der Erfindung liegt somit die Aufgabe zugrunde, ein Verfahren und ein System vorzustellen, das es erlaubt, auf einfache Art und Weise ein geeignetes Austauschfeldgerät für eine Anlage zu auszuwählen.

Die Erfindung wird durch ein Verfahren zur Instandhaltung einer Messstelle in einer Anlage der Prozessautomatisierung gelöst, welches folgende Schritte umfasst:
- Erfassen eines Produkttyps von jedem von einer Vielzahl von Feldgeräten, wobei sich die Feldgeräte in einem Lager befinden, und Speichern der Produkttypen in einer Datenbank;
- Erheben von jeweiligen Gerätemerkmalen der Vielzahl der Feldgeräte, wobei die Gerätemerkmale eine diskrete Darstellung von Leistungsmerkmalen von jedem der Vielzahl der Feldgeräte, und Zuordnen der jeweiligen Gerätemerkmale zu den in der Datenbank gespeicherten Produkttypen;
- Erheben des Produkttyps und der Gerätemerkmale eines in der Messstelle befindlichen auszutauschenden Feldgeräts;
- Vergleichen des Produkttyps und der Gerätemerkmale des auszutauschenden Feldgeräts mit den in der Datenbank gespeicherten Produkttypen und den zugeordneten Gerätemerkmalen;
- Berechnen einer Eignungsbewertung anhand einer Ersetzungsmatrix für jedes der Vielzahl der Feldgeräte, wobei die Eignungsbewertung einen Grad der Übereinstimmung der Gerätemerkmale darstellt und wobei die Ersetzungsmatrix eine Regel für ein gegenseitiges Ersetzen verschiedener Gerätemerkmale darstellt; und
- Offenlegung der Eignungsbewertungen an einen Kunde, wobei der Kunde ein Austauschfeldgerät aus der Vielzahl der Feldgeräte anhand der Eignungsbewertung auswählt, wobei eine höhere Eignungsbewertung einen höheren Grad der Übereinstimmung der Gerätemerkmale darstellt.

Der Vorteil des erfindungsgemäßen Verfahrens besteht darin, dass es dem Kunden wesentlich erleichtert wird, ein für die Messstelle passendes Austauschfeldgerät aus seinem Lagerbestand auszuwählen. Selbst wenn sich die Gerätemerkmale der Feldgeräte unterscheiden, ist durch die Logik der Ersetzungsmatrix die Möglichkeit gegeben, ein Austauschfeldgerät auszuwählen, welches sich in den Gerätemerkmalen von den Gerätemerkmalen des auszutauschenden Feldgeräts unterscheidet. Die Ersetzungsmatrix bezeichnet hierbei einen logischen Algorithmus.

Um ein Austauschfeldgerät auswählen zu können, welches sich in den Gerätemerkmalen von den Gerätemerkmalen des auszutauschenden Feldgeräts unterscheidet, müssen die Gerätemerkmale des Austauschfeldgeräts diejenigen des auszutauschenden Feldgeräts ersetzen können. Beispielsweise ist es möglich, ein auszutauschendes Feldgerät, welches als Gerätemerkmal "nicht ex-zertifiziert" besitzt, mit einem Austauschfeldgerät auszutauschen, welches als Gerätemerkmal "ex-zertifiziert" besitzt. Andersherum ist dies jedoch nicht möglich.

Somit ist eine schnelle Instandhaltung durch einen unmittelbaren Austausch des Feldgeräts möglich. Um die Inbetriebnahme des Austauschfeidgeräts zu beschleunigen, kann ein zuletzt gespeicherter Parametersatz des bisherigen Feldgeräts in das Austauschfeldgerät gespeichert werden. Voraussetzung hierzu ist aber eine Datensatzkompatibilität des Austauschfeldgeräts zu dem bisherigen Feldgerät.

In einer vorteilhaften Weiterbildung des erfindungsgemäßen Verfahrens werden zusätzlich zur Eignungsbewertung Unterschiede der Gerätemerkmale des auszutauschenden Feldgeräts zu den Gerätemerkmalen der im Lager befindlichen Feldgeräte angezeigt. Dadurch ist eine bewusstere Entscheidung des Kundes für ein Austauschgerät möglich, da ihm die Eignungsbewertung transparent gemacht wird, bspw. wenn für mehrere verschiedene potentielle Austauschfeldgeräte ähnliche Werte der Eignungsbewertung berechnet werden. Auch das Risiko einer eventuellen Fehlentscheidung kann dadurch verringert werden.

Eine besonders bevorzugte Variante des erfindungsgemäßen Verfahrens sieht vor, dass zusätzlich folgende Schritte durchgeführt werden, falls keines der Vielzahl der Feldgeräte den identischen Produkttyp wie das in der Messstelle auszutauschende Feldgerät besitzt:
- Erheben einer Messstellenanforderung der Messstelle der Anlage, wobei die Messstellenanforderung eine Anforderung an technische Eigenschaften oder eine Anforderung an Leistungsmerkmale oder eine Beschreibung zulässiger Betriebsbereiche ist;
- Übersetzen der Messstellenanforderung der Messstelle der Anlage in benötigte Gerätemerkmale;
- Vergleichen der benötigten Gerätemerkmale mit den in der Datenbank gespeicherten zugeordneten Gerätemerkmalen und Berechnung der Eignungsbewertung für jedes der Vielzahl der Feldgeräte; und
- Auswahl desjenigen der Vielzahl der Feldgeräte durch den Kunde, welches die höchste Eignungsbewertung in Form des höchsten Grads der Übereinstimmung der Gerätemerkmale besitzt.

Der Vorteil dieser Variante des erfindungsgemäßen Verfahrens besteht darin, dass selbst dann potentielle Austauschfeldgeräte gefunden werden können, wenn kein Austauschfeldgerät mit passendem Produkttyp auf Lager ist. Beispielsweise ist es möglich, ein magnetisch induktives Durchflussmessgerät durch ein Durchflussmessgerät anderer Art zu ersetzen, wenn nur die Übereinstimmung der Gerätemerkmale hoch genug ist.

Ebenso möglich ist es, dass das durch diese Variante ausgewählte Austauschfeldgerät sogar eine bessere Abstimmung auf die Anforderungen der Messstelle zeigt, als das bisher verwendete auszutauschende Feldgerät, da durch diese Variante und die Übersetzung der Messstellenanforderung in Gerätemerkmale eine Optimierung der Suche auf die Spezifikation der Messstelle erfolgt.

In einer besonders vorteilhaften Weiterbildung des erfindungsgemäßen Verfahrens werden die Verfahrensschritte nach Anspruch 1 und die Verfahrensschritte nach Unteranspruch 3 parallel durchgeführt. Der Vorteil der Variante des erfindungsgemäßen Verfahrens besteht darin, dass die Anzahl der als infrage kommenden Austauschfeldgeräte aus dem Lager erhöht wird.

Des Weiteren wird die Aufgabe durch ein System zur Instandhaltung einer Anlage der Prozessautomatisierung, das zur Durchführung des erfindungsgemäßen Verfahrens geeignet ist, gelöst, zumindest umfassend
- eine Vielzahl von Feldgeräten, die sich in einem Lager befinden;
- eine Datenbank zum Speichern eines Produkttyps von jedem der Vielzahl der Feldgeräte, von jeweiligen Bestellmerkmalen der Vielzahl der Feldgeräte;
- eine Recheneinheit, in die eine Ersetzungsmatrix implementiert ist, die auf die Datenbank zugreift und dort Daten auslesen, speichern und/oder zuordnen kann und eine Eignungsbewertung für jedes der Vielzahl der Feldgeräte berechnet.

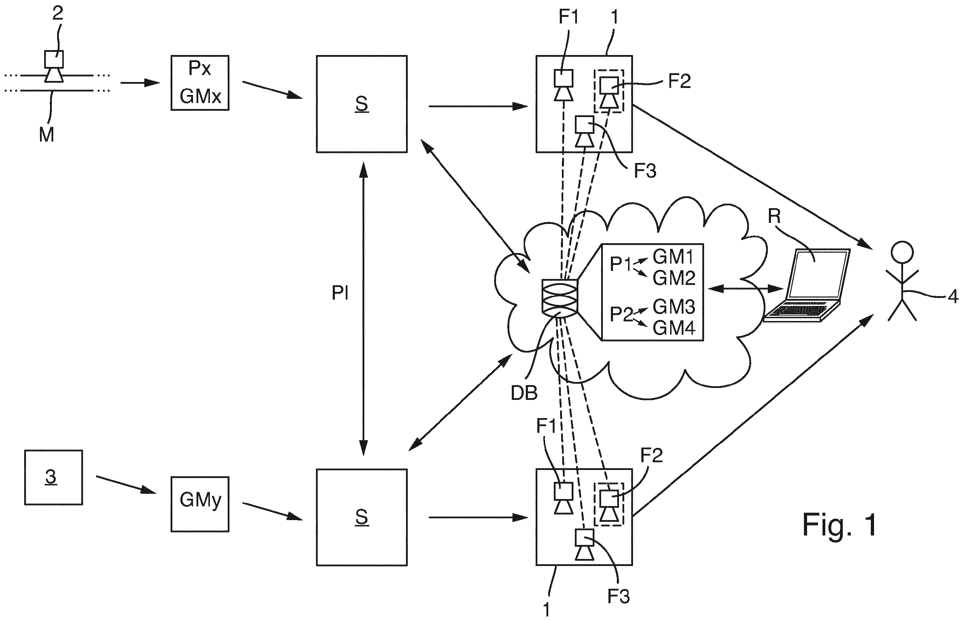

Die Erfindung wird anhand der nachfolgenden Figur näher erläutert. Es zeigt
Fig. 1: eine Ausgestaltung des erfindungsgemäßen Verfahrens zur Instandhaltung einer Messstelle in einer Anlage der Prozessautomatisierung.

Fig. 1 zeigt eine Ausgestaltung des erfindungsgemäßen Verfahrens zur Instandhaltung einer Messstelle in einer Anlage der Prozessautomatisierung. In einer Messstelle M einer Anlage der Prozessautomatisierung eines Kunden 4 befindet sich ein Feldgerät 2, welches aufgrund eines Defektes oder altersbedingt ausgetauscht werden soll.

In einem Lager eines Kunden befindet sich eine Vielzahl von Feldgeräten F₁, F₂, F₃. Um die Eignung für ein Austauschfeldgerät eines jeden einzelnen der Vielzahl der Feldgeräte F₁, F₂, F₃ zu überprüfen, wird jeweils der Produkttyp P₁, P₂ und die Gerätemerkmale GM₁, GM₂, GM₃, GM₄ von jedem der Vielzahl der Feldgeräte F₁, F₂, F₃ erfasst. Das Erfassen kann manuell geschehen, wobei der Kunde 4 die Produkttypen P₁, P₂ und die Gerätemerkmale F₁, F₂, F₃ in eine Recheneinheit R eingegeben werden. Da ein einzelnes Feldgerät ungefähr 60 - 80 verschiedene Gerätemerkmale GM₁, GM₂, GM₃, GM₄ besitzt, kann der Erfassungsprozess aufwendig und langwierig sein. Daher ist es alternativ möglich, Bestellmerkmale der Feldgeräte F₁, F₂, F₃ anzugeben, die automatisch in die Gerätemerkmale GM₁, GM₂, GM₃, GM₄ umgewandelt werden.

Im Folgenden ein Beispiel für ein Bestellmerkmal "Profibus PA", von einem der Vielzahl der Feldgeräte F₁, F₂, F₃, genauer eines Differenzdruckmessgerätes, mit daraus umgewandelten Gerätemerkmalen GM₁, GM₂, GM₃, GM₄:

| Bestellmerkmal | Profibus PA | |
|---|---|---|
| Gerätemerkmale | GM₁: Parametriersoftware | -> Fernbedienung via FieldCare |
| | GM₂: Elektrischer Anschluss | -> Schraubklemmen |
| | GM₃: Versorgungsart | -> Zweileiter |
| | GM₄: Protokolltyp | -> Profibus PA |

"Profibus PA" steht hierbei für ein Bestellmerkmal der Kommunikation. Weitere im Lager befindliche Feldgeräte F₁, F₂, F₃ können unter Umständen ein anderes Bestellmerkmal der Kommunikation, beispielsweise nach einem Feldbusprotokoll HART, Foundation Fieldbus, etc. besitzen und dadurch voneinander verschiedene Gerätemerkmale besitzen.

Die erfassten Produkttypen P₁, P₂ der Vielzahl der Feldgeräte F₁, F₂, F₃. und die erfassten/umgewandelten Gerätemerkmale GM₁, GM₂, GM₃, GM₄ werden einander zugeordnet und in einer Datenbank DB gespeichert. Die Datenbank (DB) ist mittels Cloud Computing WebServices erreichbar. Unter Cloud Computing wird in diesem Fall das Speichern von Daten in einem entfernten Rechenzentrum, in diesem Fall in einer entfernten Datenbank, beschrieben. Der Vorteil besteht darin, dass eine Zentralisierung der Datenbestände erfolgt, da jedes Feldgerät seine Daten in Form von Gerätetypen und Diagnosemeldungen auf diese Datenbank speichert.

Des Weiteren wird der Produkttyp Pₓ des auszutauschenden Feldgeräts und dessen Gerätemerkmale GMx erfasst.

Anschließend wird mit einem Suchverfahren S nach einem Austauschfeldgerät aus der Vielzahl der Feldgeräte F₁, F₂, F₃ begonnen. Hierfür wird zuerst der Produkttyp Pₓ des auszutauschenden Feldgeräts 2 mit den Produkttypen P₁, P₂ der Vielzahl der Feldgeräte F₁, F₂, F₃ verglichen. Anschließend werden die Gerätemerkmale GMₓ mit den Gerätemerkmalen GM₁, GM₂, GM₃, GM₄ der Vielzahl der Feldgeräte F₁, F₂, F₃.verglichen. Ein logischer Algorithmus in Form einer Ersetzungsmatrix erstellt für jedes der Vielzahl der Feldgeräte F₁, F₂, F₃ eine Eignungsbewertung. Eine Eignungsbewertung zeigt einen Grad der Übereinstimmung von Gerätemerkmalen zwischen dem auszutauschenden Feldgerät 2 und einem potentiellen Austauschfeldgerät der Vielzahl der Feldgeräte F₁, F₂, F₃ an. Je größer die Übereinstimmung der Gerätemerkmale GM₁, GM₂, GM₃, GM₄, GMₓ ist, desto höher ist dabei die Eignungsbewertung.

Um ein Austauschfeldgerät F₁, F₂, F₃ auswählen zu können, welches sich in den Gerätemerkmalen GMₓ zu den Gerätemerkmalen GM₁, GM₂, GM₃, GM₄ des auszutauschenden Feldgeräts 2 unterscheidet, müssen die Gerätemerkmale GMₓ des Austauschfeldgeräts F₁, F₂, F₃ diese des auszutauschenden Feldgeräts 2 ersetzen können. Beispielsweise ist es möglich, ein auszutauschendes Feldgerät 2, welches als Gerätemerkmal GM₁, GM₂, GM₃, GM₄ "nicht ex-zertifiziert" besitzt, mit einem Austauschfeldgerät auszutauschen, welches als Gerätemerkmal GM₁, GM₂, GM₃, GM₄ "ex-zertifiziert" besitzt. Andersherum ist dies jedoch nicht möglich. Im obigen Beispiel des Differenzdruckgerätes ist beispielsweise eine Ersetzung des Gerätemerkmals GM₂, "Elektrischer Anschluss", möglich, eine Ersetzung des Gerätemerkmals GM₄ "Protokolltyp" ist jedoch nicht möglich. Die Ersetzungsmatrix verfügt jederzeit über die benötigten Informationen, um eine eindeutige Aussage über eine Ersetzungsmöglichkeit eines Gerätemerkmals GM₁, GM₂, GM₃, GM₄ treffen zu können. Beispielsweise kann die Ersetzungsmatrix über eine Datenbank mit möglichen Ersetzungen verfügen. Bevorzugt wird diese Datenbank regelmäßig durch Updates auf dem neuesten Stand gehalten.

Nach Berechnung der Eignungsbewertung für jedes der Vielzahl der Feldgeräte F₁, F₂, F₃ werden dem Kunden diese Eignungsbewertungen offengelegt, wobei dem Kunden 4 nahegelegt wird, eines der Feldgeräte F₁, F₂, F₃ mit der höchsten Eignungsbewertung auszuwählen. Außerdem können dem Kunden die Unterschiede der Gerätemerkmale GMₓ des auszutauschenden Feldgeräts 2 zu den Gerätemerkmalen GM₁, GM₂, GM₃, GM₄ der im Lager 1 befindlichen Feldgeräte F₁, F₂, F₃ angezeigt werden, wodurch der Kunde eine bewusstere Entscheidung für ein Austauschfeldgerät F₁, F₂, F₃ treffen kann. In diesem Ausführungsbeispiel ist dies Feldgerät F₂.

Falls keines der Vielzahl der Feldgeräte F₁, F₂, F₃ den identischen Produkttyp P₁, P₂ wie das in der Messstelle M auszutauschende Feldgerät 2 besitzt, wird eine Messstellenanforderung 3 der Messstelle M der Anlage erhoben, wobei die Messstellenanforderung 3 eine Anforderung an technische Eigenschaften oder eine Anforderung an Leistungsmerkmale oder eine Beschreibung zulässiger Betriebsbereiche ist. Die Messstellenanforderung 3 der Messstelle M der Anlage wird anschließend in benötigte Gerätemerkmale GM_{y} übersetzt. Daraufhin wird wie oben beschrieben mit einem Suchverfahren S nach einem Austauschfeldgerät aus der Vielzahl der Feldgeräte F₁, F₂, F₃ begonnen. Hierfür werden auch hier Eignungsbewertungen für jedes der Vielzahl der Feldgeräte F₁, F₂, F₃ erstellt, wobei dem Kunden 4 nahegelegt wird, eines der Feldgeräte F₁, F₂, F₃ mit der höchsten Eignungsbewertung auszuwählen. In diesem Ausführungsbeispiel ist dies Feldgerät F₂.

Der Vorteil dieser Variante des erfindungsgemäßen Verfahrens besteht darin, dass selbst dann potentielle Austauschfeldgeräte aus der Vielzahl der Feldgeräte F₁, F₂, F₃ gefunden werden können, wenn kein Austauschfeldgerät aus der Vielzahl der Feldgeräte F₁, F₂, F₃ mit passendem Produkttyp auf Lager ist. Beispielsweise ist es möglich, ein magnetisch induktives Durchflussmessgerät durch ein Durchflussmessgerät anderer Art zu ersetzen, wenn die Übereinstimmung der Gerätemerkmale GM₁, GM₂, GM₃, GM₄, GM_{y} hoch genug ist

In einer weiteren Variation kann der Kunde 4 beide beschriebene Verfahren in einer parallelen Verfahrensausführung PI durchführen, wodurch der Kunde eine wesentliche höhere Auswahlmöglichkeit für ein Austauschfeldgerät aus einem der Vielzahl der Feldgeräte F₁, F₂, F₃ erhält.

### Bezugszeichenliste

- DB: Datenbank
- GM₁, GM₂, GM₃, GM₄: Gerätemerkmale der Feldgeräte aus Lager
- GMₓ: Gerätemerkmale des auszutauschenden Feldgeräts
- GM_{y}: Gerätemerkmale aus Messstellenanforderung
- P₁, P₂: Produkttypen der Feldgeräte aus Lager
- Pₓ: Produkttyp des auszutauschenden Feldgeräts
- PI: Parallele Verfahrensausführung
- R: Recheneinheit
- S: Suchverfahren
- F₁, F₂, F₃: Vielzahl von Feldgeräten
- 1: Lager
- 2: auszutauschendes Feldgerät
- 3: Messstellenanforderung
- 4: Kunde

## Patentansprüche

1. Verfahren zur Instandhaltung einer Messstelle (M) in einer Anlage der Prozessautomatisierung, umfassend folgende Schritte:
- Erfassen eines Produkttyps (P₁, P₂) von jedem von einer Vielzahl von Feldgeräten (F₁, F₂, F₃), wobei sich die Feldgeräte in einem Lager (1) befinden, und Speichern der Produkttypen (P₁, P₂) in einer Datenbank (DB);
- Erheben von jeweiligen Gerätemerkmalen (GM₁, GM₂, GM₃, GM₄) der Vielzahl der Feldgeräte (F₁, F₂, F₃), wobei die Gerätemerkmale (GM₁, GM₂, GM₃, GM₄) eine diskrete Darstellung von Leistungsmerkmalen von jedem der Vielzahl der Feldgeräte, und Zuordnen der jeweiligen Gerätemerkmale (GM₁, GM₂, GM₃, GM₄) zu den in der Datenbank (DB) gespeicherten Produkttypen (P₁, P₂);
- Erheben des Produkttyps (Pₓ) und der Gerätemerkmale (GMₓ) eines in der Messstelle befindlichen auszutauschenden Feldgeräts (2);
- Vergleichen des Produkttyps (Pₓ) und der Gerätemerkmale (GMₓ) des auszutauschenden Feldgeräts (2) mit den in der Datenbank (DB) gespeicherten Produkttypen (P₁, P₂) und den zugeordneten Gerätemerkmalen (GM₁, GM₂, GM₃, GM₄);
- Berechnen einer Eignungsbewertung anhand einer Ersetzungsmatrix für jedes der Vielzahl der Feldgeräte (F₁, F₂, F₃), wobei die Eignungsbewertung einen Grad der Übereinstimmung der Gerätemerkmale (GM₁, GM₂, GM₃, GM₄, GMₓ) darstellt und wobei die Ersetzungsmatrix eine Regel für ein gegenseitiges Ersetzen verschiedener Gerätemerkmale (GM₁, GM₂, GM₃, GM₄, GMₓ) darstellt; und
- Offenlegung der Eignungsbewertungen an einen Kunde (4), wobei der Kunde (4) ein Austauschfeldgerät aus der Vielzahl der Feldgeräte (F₁, F₂, F₃) anhand der Eignungsbewertung auswählt, wobei eine höhere Eignungsbewertung einen höheren Grad der Übereinstimmung der Gerätemerkmale (GM₁, GM₂, GM₃, GM₄, GMₓ) darstellt.

2. Verfahren nach Anspruch 1, wobei zusätzlich zur Eignungsbewertung Unterschiede der Gerätemerkmale (GMₓ) des auszutauschenden Feldgeräts (2) zu den Gerätemerkmalen (GM₁, GM₂, GM₃, GM₄) der im Lager (1) befindlichen Feldgeräte (F₁, F₂, F₃) angezeigt werden.

3. Verfahren nach einem der vorherigen Ansprüche, wobei zusätzlich folgende Schritte durchgeführt werden, falls keines der Vielzahl der Feldgeräte (F₁, F₂, F₃) den identischen Produkttyp (P₁, P₂) wie das in der Messstelle (M) auszutauschende Feldgerät (2) besitzt:
- Erheben einer Messstellenanforderung (3) der Messstelle (M) der Anlage, wobei die Messstellenanforderung (3) eine Anforderung an technische Eigenschaften oder eine Anforderung an Leistungsmerkmale oder eine Beschreibung zulässiger Betriebsbereiche ist;
- Übersetzen der Messstellenanforderung (3) der Messstelle (M) der Anlage in benötigte Gerätemerkmale (GM_{y});
- Vergleichen der benötigten Gerätemerkmale (GM_{y}) mit den in der Datenbank (DB) gespeicherten zugeordneten Gerätemerkmalen (GM₁, GM₂, GM₃, GM₄, GM_{y}) und Berechnung der Eignungsbewertung für jedes der Vielzahl der Feldgeräte (F₁, F₂, F₃); und
- Auswahl desjenigen der Vielzahl der Feldgeräte (F₁, F₂, F₃) durch den Kunde (4), welches die höchste Eignungsbewertung in Form des höchsten Grads der Übereinstimmung der Gerätemerkmale (GM₁, GM₂, GM₃, GM₄, GM_{y}) besitzt.

4. Verfahren nach einem der vorherigen Ansprüche, wobei die Verfahrensschritte nach Anspruch 1 und die Verfahrensschritte nach Anspruch 3 parallel (PI) durchgeführt werden.

5. System zur Instandhaltung einer Messstelle (M) in einer Anlage der Prozessautomatisierung, das zur Durchführung des Verfahrens nach einem der Ansprüche 1 bis 4 geeignet ist, zumindest umfassend
- eine Vielzahl von Feldgeräten (F₁, F₂, F₃), die sich in einem Lager (1) befinden;
- eine Datenbank (DB) zum Speichern eines Produkttyps (P₁, P₂) von jedem der Vielzahl der Feldgeräte (F₁, F₂, F₃) und von jeweiligen Gerätemerkmalen (GM₁, GM₂, GM₃, GM₄) der Vielzahl der Feldgeräte (F₁, F₂, F₃);
- eine Recheneinheit, in die eine Ersetzungsmatrix implementiert ist, die auf die Datenbank (DB) zugreift und dort Daten auslesen, speichern und/oder zuordnen kann und eine Eignungsbewertung für jedes der Vielzahl der Feldgeräte (F₁, F₂, F₃) berechnet.

## Claims

1. Method for the maintenance of a measuring point (M) in a process automation system, said method comprising the following steps:
- Recording of the product type (P₁, P₂) of each field device of a multitude of field devices (F₁, F₂, F₃), wherein the field devices are located in a warehouse (1), and saving of the product types (P₁, P₂) in a database (DB);
- Capturing of device features (GM₁, GM₂, GM₃, GM₄) of the multitude of field devices (F₁, F₂, F₃), wherein the device features (GM₁, GM₂, GM₃, GM₄) constitute a discrete representation of the performance characteristics of each of the multiple field devices, and assignment of the various device characteristics (GM₁, GM₂, GM₃, GM₄) to the product types (P₁, P₂) saved in the database (DB);
- Capturing of the product type (Pₓ) and the device characteristics (GMₓ) of a field device (2) that is located in the measuring point and is to be replaced;
- Comparison of the product type (Pₓ) and the device characteristics (GMₓ) of the field device (2) to be replaced with the product types (P₁, P₂) saved in the database (DB) and the assigned device characteristics (GM₁, GM₂, GM₃, GM₄);
- Calculation of a suitability assessment using a replacement matrix for each of the multiple field devices (F₁, F₂, F₃), wherein the suitability assessment represents a degree of similarity of the device characteristics (GM₁, GM₂, GM₃, GM₄, GMₓ) and wherein the replacement matrix is a rule for the mutual replacement of different device characteristics (GM₁, GM₂, GM₃, GM₄, GMₓ); and
- Disclosure of suitability assessments to a client (4), wherein the client (4) selects a replacement field device from the multitude of field devices (F₁, F₂, F₃) on the basis of the suitability assessment, wherein a higher suitability assessment represents a higher degree of similarity of the device characteristics (GM₁, GM₂, GM₃, GM₄, GMₓ).

2. Method as claimed in Claim 1, wherein differences between the device characteristics (GMₓ) of the field device (2) that is to be replaced and the device characteristics (GM₁, GM₂, GM₃, GM₄) of the field devices (F₁, F₂, F₃) in the warehouse (1) are also indicated in addition to the similarity assessment.

3. Method as claimed in one of the previous claims, wherein the following steps are also performed if none of the multiple field devices (F₁, F₂, F₃) has an identical product type (P₁, P₂) to that of the field device (2) to be replaced in the measuring point (M);
- Elicitation of a measuring point request (3) from the measuring point (M) of the system, wherein said measuring point request (3) is a requirement with regard to the technical characteristics or a requirement with regard to performance characteristics or a description of permissible ranges of operation;
- Translation of the measuring point request (3) from the measuring point (M) of the system into the required device characteristics (GM_{y});
- Comparison of the required device characteristics (GM_{y}) with the assigned device characteristics (GM₁, GM₂, GM₃, GM₄, GM_{y}) saved in the database (DB) and calculation of the suitability assessment for each of the multiple field devices (F₁, F₂, F₃); and
- Selection by the client (4) of the field device (F₁, F₂, F₃) which has the highest suitability assessment in the form of the highest degree of similarity of the device characteristics (GM₁, GM₂, GM₃, GM₄, GM_{y}).

4. Method as claimed in one of the previous claims, wherein the steps as claimed in Claim 1 and the steps as claimed in Claim 3 are performed in parallel (PI).

5. System for the maintenance of a measuring point (M) in a process automation system which is suitable to carry out the method as claimed in one of the Claims 1 to 4, comprising at least
- a multitude of field devices (F₁, F₂, F₃) which are located in a warehouse (1);
- a database (DB) designed to record a product type (P₁, P₂) of each of the field devices (F₁, F₂, F₃) and of device characteristics (GM₁, GM₂, GM₃, GM₄) of the multiple field devices (F₁, F₂, F₃) ;
- a computer unit in which a replacement matrix is implemented which accesses the database (DB) where it can read out, save and/or assign data, and calculates a suitability assessment for each of the multiple field devices (F₁, F₂, F₃).

## Revendications

1. Procédé destiné à la maintenance d'un point de mesure (M) dans une installation de la technique d'automatisation des process, comprenant les étapes suivantes :
- Saisie d'un type de produit (P₁, P₂) pour chacun des appareils de terrain (F₁, F₂, F₃), les appareils de terrain se trouvant dans un magasin (1), et enregistrement des types de produit (P₁, P₂) dans une base de données (DB) ;
- Collecte de caractéristiques d'appareil (GM₁, GM₂, GM₃, GM₄) respectives des appareils de terrain (F₁, F₂, F₃), les caractéristiques d'appareil (GM₁, GM₂, GM₃, GM₄) constituant une représentation discrète des caractéristiques de performance de chacun des appareils de terrain, et attribution des différentes caractéristiques d'appareil (GM₁, GM₂, GM₃, GM₄) aux types de produit (P₁, P₂) enregistrés dans la base de données (DB) ;
- Collecte du type de produit (Pₓ) et des caractéristiques d'appareil (GMₓ) d'un appareil de terrain (2) à remplacer, se trouvant dans le point de mesure ;
- Comparaison du type de produit (Pₓ) et des caractéristiques d'appareil (GMₓ) de l'appareil de terrain (2) à remplacer avec les types de produit (P₁, P₂) enregistrés dans la base de données (DB) et les caractéristiques d'appareil (GM₁, GM₂, GM₃, GM₄) attribuées ;
- Calcul d'une évaluation de l'aptitude au moyen d'une matrice de substitution pour chacun des appareils de terrain (F₁, F₂, F₃), l'évaluation de l'aptitude représentant un degré de concordance des caractéristiques d'appareil (GM₁, GM₂, GM₃, GM₄, GMₓ) et la matrice de substitution représentant une règle pour le remplacement mutuel de différentes caractéristiques d'appareil (GM₁, GM₂, GM₃, GM₄, GMₓ) ; et
- Divulgation des évaluations de l'aptitude à un client (4), le client (4) sélectionnant un appareil de terrain de remplacement parmi les appareils de terrain (F₁, F₂, F₃) sur la base de l'évaluation de l'aptitude, une évaluation de l'aptitude supérieure représentant un degré supérieur de concordance des caractéristiques d'appareil (GM₁, GM₂, GM₃, GM₄, GMₓ).

2. Procédé selon la revendication 1, pour lequel des différences entre les caractéristiques d'appareil (GMₓ) de l'appareil de terrain (2) à remplacer et les caractéristiques d'appareil (GM₁, GM₂, GM₃, GM₄) des appareils de terrain (F₁, F₂, F₃) se trouvant dans le magasin (1) sont affichées en plus de l'évaluation de l'aptitude.

3. Procédé selon l'une des revendications précédentes, pour lequel les étapes supplémentaires suivantes sont exécutées, au cas où aucun parmi les appareils de terrain (F₁, F₂, F₃) ne possède le type de produit (P₁, P₂) identique à l'appareil de terrain (2) à remplacer dans le point de mesure (M) ;
- Collecte d'une demande de point de mesure (3) du point de mesure (M) de l'installation, la demande de point de mesure (3) étant une demande de caractéristiques techniques ou une demande de caractéristiques de performance ou une description de gammes de fonctionnement admissibles ;
- Traduction de la demande de point de mesure (3) du point de mesure (M) de l'installation en caractéristiques d'appareil (GM_{y}) requises ;
- Comparaison des caractéristiques d'appareil (GM_{y}) requises avec les caractéristiques d'appareil (GM₁, GM₂, GM₃, GM₄, GM_{y}) attribuées, enregistrées dans la base de données (DB) et calcul de l'évaluation de l'aptitude pour chacun des appareils de terrain (F₁, F₂, F₃) ; et
- Sélection par le client (4) de l'appareil parmi les appareils de terrain (F₁, F₂, F₃) qui possède la plus grande évaluation de l'aptitude sous la forme du plus haut degré de concordance des caractéristiques d'appareil (GM₁, GM₂, GM₃, GM₄, GM_{y}).

4. Procédé selon l'une des revendications précédentes, pour lequel sont exécutées en parallèle (PI) les étapes de procédé selon la revendication 1 et les étapes de procédé selon la revendication 3.

5. Système destiné à la maintenance d'un point de mesure (M) dans une installation de la technique d'automatisation des process, qui est approprié pour l'exécution du procédé selon l'une des revendications 1 à 4, comprenant au moins
- des appareils de terrain (F₁, F₂, F₃) qui se trouvent dans un magasin (1) ;
- une base de données (DB) destinée à l'enregistrement d'un type de produit (P₁, P₂) de chacun des appareils de terrain (F₁, F₂, F₃) et de caractéristiques d'appareil (GM₁, GM₂, GM₃, GM₄) respectives des appareils de terrain (F₁, F₂, F₃) ;
- une unité de calcul, dans laquelle est implémentée une matrice de substitution, qui accède à la base de données (DB) et qui peut y lire, enregistrer et/ou attribuer des données, et calcule une évaluation de l'aptitude pour chacun des appareils de terrain (F₁, F₂, F₃).
